Europäisches Patentamt

European Patent Office

Office européen des brevets

(11) Publication number: **0 307 851 B1**

# EUROPEAN PATENT SPECIFICATION

(45) Date of publication of patent specification: **25.03.92**   (51) Int. Cl.⁵: **B60H 1/32**, F16F 15/08, F25B 31/00

(21) Application number: **88114930.6**

(22) Date of filing: **13.09.88**

(54) Mounting mechanism for an automotive air conditioning compressor.

(30) Priority: **14.09.87 JP 140165/87 U**
**14.09.87 JP 140166/87 U**

(43) Date of publication of application:
**22.03.89 Bulletin 89/12**

(45) Publication of the grant of the patent:
**25.03.92 Bulletin 92/13**

(84) Designated Contracting States:
**DE FR GB IT SE**

(56) References cited:
EP-A- 0 264 833     JP-U- 5 761 252
US-A- 1 895 663     US-A- 2 048 256
US-A- 4 600 367     US-A- 4 676 473

(73) Proprietor: **SANDEN CORPORATION**
**20 Kotobuki-cho**
**Isesaki-shi Gunma, 372(JP)**

(72) Inventor: **Shimazaki, Seiji**
**976 Naganuma-machi**
**Isesaki-shi Gunma, 372(JP)**

(74) Representative: **Prüfer, Lutz H., Dipl.-Phys.**
**Harthauser Strasse 25d**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a mounting mechanism for a compressor as for instance disclosed in Japanese Utility Model (Pub. No. 57- 61 252, and more particularly, to an improved mounting mechanism for directly connecting a compressor in an automotive air conditioning system with an automobile engine.

It is well known that a compressor, which is used in an automotive air conditioning system, is directly mounted on the engine of the automobile. The normal mounting arrangement of this type of mounting mechanism comprises a plurality of attachments which are formed on the housing of the compressor and a plurality of bolts to mount the compressor on the engine through the attachments. The compressor is thus directly mounted on the engine fixedly.

Referring to Figure 1, which illustrates the main portion of a conventional mounting mechanism, compressor 10 has attaching portions 11 which are formed on the outer surface of the compressor housing. Attaching portions 11 include one hole 12 as shown in Figures 2 and 3, respectively and extend in the perpendicular direction to the axis of compressor 10. A plurality of holes 20 are formed on the end portion of engine 21 and are positioned to correspond to holes 12 of attaching portions 11. Bolts 30 are respectively inserted into holes 12 through washers 31 and spring washers 32 ,and screwed into holes 20. Compressor 10 is thus securely fixed on engine 21 directly.

In such a mounting construction, compressor 10 and engine 21, both of which are formed of high strength material, are directly connected through a bolt-nut mechanism. Mechanical vibration, more specifically vibration in the axial direction, which is generated by the operation of compressor 10, is thus transmitted from the engine compartment to the passenger compartment of the automobile.

It is a primary object of this invention to provide a mounting mechanism for a compressor in an automotive air conditioning system which reduces the transmission of vibration produced by the compressor to an automobile engine, thereby preventing the production of objectionable noise.

A mounting mechanism in accordance with this invention includes a flange portion projecting from an outer peripheral surface of the compressor and bolt-nut mechanisms to connect between the flange portion of the compressor and the automobile engine. The flange portion has at least one first hole and an attaching mechanism including at least one cylindrical bush which is fixedly disposed within the first hole having an outer cylinder, an inner cylinder and a vibroisolating rubber member which is fixedly disposed between the outer and inner cylinders by adhesion. At least two attaching members include bars which are securely inserted into the inner cylinder and cylindrical portions which are connected to the bars and have second holes.

Further objects, features and other aspects of this invention will be understood from the following detailed description of preferred embodiments of this invention with reference to the annexed drawings.

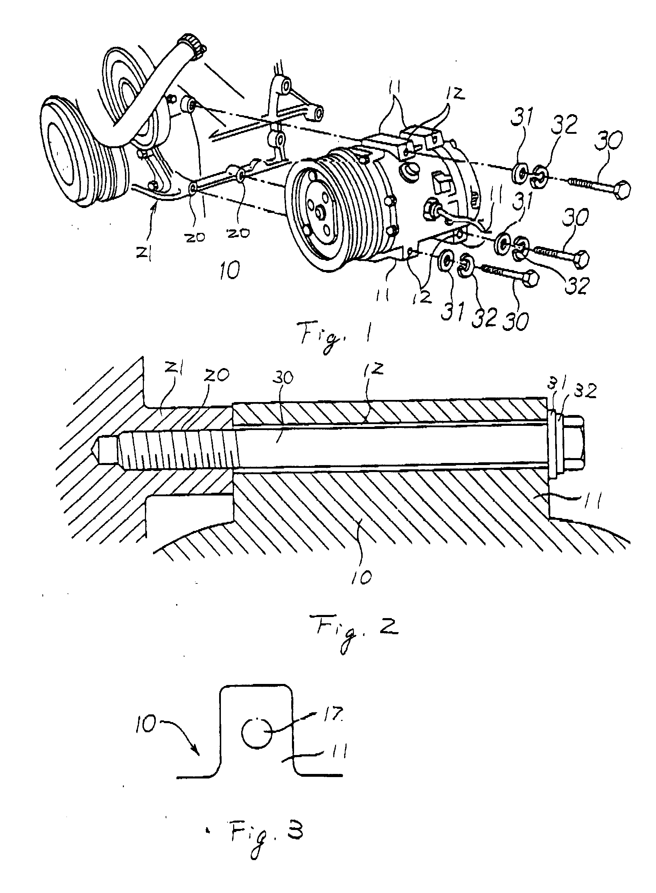

Figure 1 is an exploded perspective view of a conventional mounting mechanism for a compressor in an automotive air conditioning system.

Figure 2 is a cross-sectional view of a part of the mounting mechanism for the compressor in the automotive air conditioning system shown in Figure 1.

Figure 3 is a front view of an attachment of the mounting mechanism for the compressor in the automotive air conditoning system shown in Figures 1 and 2.

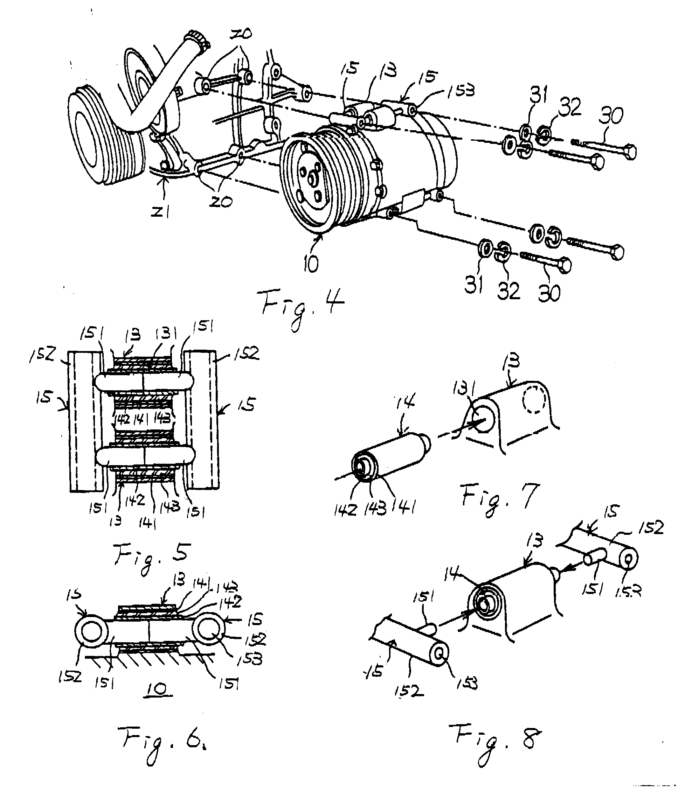

Figure 4 is an exploded perspective view of a mounting mechanism for a compressor in an automotive air conditioning system in accordance with one embodiment of this invention.

Figure 5 is a plain cross-sectional view of a part of a mounting mechanism for a compressor in an automotive air conditioning system shown in Figure 4.

Figure 6 is a side cross-sectional view of a part of a mounting mechanism for a compressor in an automotive air conditioning system shown in Figure 4.

Figure 7 is an enlarged perspective view of attaching a cylindrical bush.

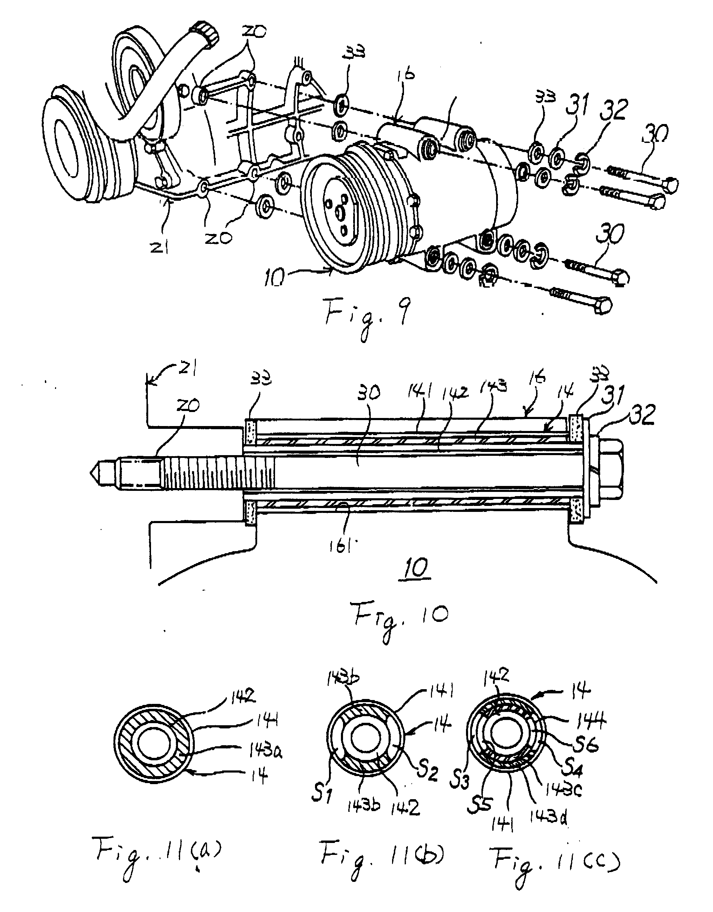

Figure 8 is an enlarged perspective view of attaching an attaching member.

Figure 9 is an exploded perspective view of a mounting mechanism for a compressor in an automotive air conditioning system in accordance with the second embodiment of this invention.

Figure 10 is a cross-sectional view of a part of the mounting mechanism for the compressor in the automotive air conditioning system shown in Figure 9.

Figures 11(a), (b) and (c) are a cross-sectional view of a modified cylindrical bush, respectively.

The same numerals are accorded on the same construction in the following embodiments as in convention and the description of its construction is omitted to simplify the specification.

Referring to Figures 4, 5 and 6, the construction of the mounting mechanism in the automotive air conditioning compressor in accordance with one embodiment of this invention is shown. Compressor 10 includes a plurality of flange portions 13 which are formed on the outer surface of its compressor housing. Flange portions 13 have one hole 131, respectively and extend parallel to the axis of compressor 10. Cylindrical bush 14 is inserted into each hole 131 and fixedly disposed therein as shown in Figure 7. Cylindrical bush 14 comprises outer cylinder 141, inner cylinder 142 and vibroisolating rubber 143 disposed between outer and inner cylinders 141 and 142 so as to connect both cylinders 141 and 142 by adhesion.

Attaching members 15 are connected to both ends of cylindrical bush 14, respectively, and comprise bars 151 which are inserted into both ends of inner cylinder 142 and fixed therein, and cylindrical portions 152 which are fixed integrally at the outer end of each bar 151. Clindrical portion 152 of attaching member 15 extends in the perpendicular direction to the axis of compressor 10 and includes hole 153 to receive bolt 30. Compressor 10 is securely mounted on the end of engine 21 by screwing bolts 30 into holes 20 through washers 31 and spring washers 32.

Referring to Figures 9 and 10, the construction of the mounting mechanism for the automotive air conditioning compressor in accordance with the second embodiment of this invention is shown.

Compressor 10 has flange portions 16 which are formed on the outer surface of the compressor housing. Flange portions 16 include one hole 161, respectively and extend in the perpendicular direction to the axis of compressor 10. A cylindrical bush 14 is inserted into each of the holes 161 and fixedly disposed therein. Each cylindrical bush 14 comprises an outer cylinder 141,an inner cylinder 142 and vibroisolating rubber 143 disposed between outer and inner cylinders 141 and 142 so as to connect both cylinders 141 and 142 by adhesion. Compressor 10 is securely mounted on the end of engine 21 by screwing bolts 30 into holes 20 through rubber washers 33, washers 31 and spring washers 32.

Referring to Figures 11(a), (b) and (c), the construction of a modified cylindrical bush 14 is shown. The cross-sectional shape of vibroisolating rubber 143a in Figure 11(a) is formed to be ring-shaped so as to cover inner cylinder 142. Vibroisolaing rubber 143b in Figure 11(b) is disposed at the upper and lower portions between inner and outer cylinders 141 and 142. A pair of longitudinal spaces s1 and s2 are formed in the right and left sides in this Figure, and plate-shaped vibroisolating rubbers 143b thus can be used instead of ring-shaped vibroisolating rubber 143a. Vibroisolating rubber 143c and 143d in Figure 11(c) which are independent from each other are separated by intermadiate cylinder 144. Outer longitudinal spaces s3 and s4, and inner longitudinal spaces s5 and s6 are respectively formed between outer and inner cylinders 141 and 142.

This invention has been described in detail in connecrion with the preferred embodiment but those are examples only and the invention is not restricted thereto. It will be easily understood by those skilled in the art that variations and modifications can be easily made within the scope of this invention, as defined in the appended claims.

## Claims

1.  Mounting mechanism for directly connecting a compressor (10) of an automobile air conditioning system in a mounted position on an automobile engine (21) including a flange portion (13, 16) projecting from an outer peripheral surface of the compressor (10) and bolt-nut mechanisms connecting between the flange portion of the compressor and the automobile engine, characterised in that said flange portion (13, 16) having at least one first hole (131) and an attaching means including at least one cylindrical bush (14) fixedly disposed within said first hole (131, 161) having an outer cylinder (141), an inner cylinder (142) and a vibroisolating rubber member (143) fixedly disposed between said outer and inner cylinders (141, 142) by adhesion.

2.  Mounting mechanism according to claim 1, characterized in that said flange portion (16) is extending perpendicular to the axis of said compressor (10).

3.  Mounting mechanism according to claim 1, characterized in that there are provided at least two attaching members (15) including bars (151) securely inserted into said inner cylinder (141) and portions (152) connected to said bars (151) and having second holes (153).

4.  Mounting mechanism according to one of claims 1 to 3, wherein said vibroisolating rubber member (143a) is formed to be ring-shaped.

5.  Mounting mechanism according to one of claims 1 to 4, wherein said bolt-nut mechanism comprises a rubber washer, a metal washer and a spring washer.

## Revendications

1.  Mécanisme de montage pour connecter directement un compresseur (10) d'un dispositif de conditionnement d'air d'automobile en position montée, à un moteur (21) d'automobile, comportant une bride (13;16) faisant saillie à la surface périphérique extérieure du compresseur (10) et des mécanismes à vis-écrous servant à relier la bride du compresseur et le moteur, caractérisé en ce que ladite bride (13; 16) comporte au moins un premier trou (131; 161) et un moyen de fixation comprenant au moins une douille cylindrique (14) placée de manière fixe à l'intérieur dudit premier trou (131; 161) et est pourvue d'un cylindre extérieur (141), d'un cylindre intérieur (142) et d'un élément amortisseur de vibrations en caoutchouc (143;143a) maintenu de manière fixe par adhésion entre lesdits cylindres intérieur et extérieur (141, 142).

2.  Mécanisme de montage selon la revendication 1, caractérisé en ce que ladite bride (16) s'étend perpendiculairement à l'axe du compresseur (10).

3.  Mécanisme de montage selon la revendication 1, caractérisé en ce qu'il comprend au moins deux éléments de fixation (15) comportant des barres (151) insérées fixement dans ledit cylindre intérieur (141) et des parties (152) reliées auxdites barres (151) et présentant des deuxièmes trous (153).

4.  Mécanisme de montage selon l'une des revendications 1 à 3, caractérisé en ce que ledit élément amortisseur de vibrations en caoutchouc (143a) à la forme d'une bague.

5.  Mécanisme de montage selon l'une des revendications 1 à 4, caractérisé en ce que ledit mécanisme à vis-écrous comporte une rondelle en caoutchouc, une rondelle métallique et un rondelle élastique.

**Patentansprüche**

1.  Anbringungsmechanismus zum direkten Verbinden eines Kompressors (10) einer Kraftfahrzeugklimaanlage in einer angebrachten Position auf einem Kraftfahrzeugmotor (21) mit einem von einer äußeren Umfangsoberfläche des Kompressors (10) vorstehenden Flanschabschnitt (13, 16) und Schrauben-Mutter-Mechanismen, die zwischen dem Flanschabschnitt des Kompressors und dem Kraftfahrzeugmotor verbunden sind, dadurch gekennzeichnet, daß der Flanschabschnitt (13, 16) mindestens ein erstes Loch (131) aufweist und ein Anbringemittel mindestens eine fest innerhalb des ersten Loches (131, 161) vorgesehene, einen äußeren Zylinder (141) aufweisende zylindrische Büchse (14) aufweist, ein innerer Zylinder (142) vorgesehen ist, und ein Vibrationsisoliergummiteil (143) fest zwischen dem äußeren und inneren Zylinder (141 , 142) durch Adhäsion vorgesehen ist.

2.  Anbringungsmechanismus nach Anspruch 1 , dadurch gekennzeichnet, daß sich der Flanschabschnitt (16) senkrecht zu der Achse des Kompressors (10) erstreckt.

3.  Anbringungsmechanismus nach Anspruch 1, dadurch gekennzeichnet, daß mindestens zwei Anbringeteile (15) vorgesehen sind, die Stangen (151) aufweisen, die fest in den inneren Zylinder (141) und Abschnitte (152) eingeführt sind, die mit den Stangen (151) verbunden sind und zweite Löcher (153) aufweisen.

4.  Anbringungsmechanismus nach einem der Ansprüche 1 bis 3, bei dem das Vibrationsisoliergummiteil (143a) ringförmig gebildet ist.

5.  Anbringungsmechanismus nach einem der Ansprüche 1 bis 4, bei dem der Schrauben-Mutter-Mechanismus eine Gummischeibe, eine Metallscheibe und eine Federscheibe aufweist.

Fig. 1

Fig. 2

Fig. 3

Fig. 4

Fig. 5

Fig. 7

Fig. 6.

Fig. 8

Fig. 9

Fig. 10

Fig. 11(a)  Fig. 11(b)  Fig. 11(c)

7